# EUROPÄISCHE PATENTSCHRIFT

(11) **EP 2 360 702 B1**
(45) Veröffentlichungstag und Bekanntmachung des Hinweises auf die Patenterteilung: **29.08.2012**
(21) Anmeldenummer: 09306154.7
(22) Anmeldetag: 30.11.2009
(51) Int. Cl.: H01B 12/12

(54) **Supraleitfähiges Kabel**
Superconducting cable
Câble supraconducteur

(43) Veröffentlichungstag der Anmeldung: 24.08.2011
(73) Patentinhaber: Nexans, 75008 Paris (FR)
(72) Erfinder: Dipl.-Ing. Schmidt, Frank, 30855, Langenhagen (DE)
(74) Vertreter: Döring, Roger

(56) Entgegenhaltungen:
- EP-B1- 0 830 694
- DE-A1- 2 146 953
- DE-A1- 19 724 618
- GB-A- 1 285 441

## Beschreibung

Die Erfindung bezieht sich auf ein supraleitfähiges Kabel gemäß dem Oberbegriff des Patentanspruchs 1.

Ein solches Kabel geht aus der EP 0 830 694 B1 hervor.

Ein supraleitfähiges Kabel hat in der heutigen Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise mit seltenen Erden dotierte Materialien, die unter der Bezeichnung ReBCO (Rare-earth-Barium-Kupfer-Oxid) bekannt geworden sind, zu denen insbesondere YBCO (Yttrium-Barium-Kupfer-Oxid) gehört. Ein anderes dieser supraleitfähigen Materialien ist beispielsweise BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Die DE 197 24 618 A1 beschreibt einen Supraleiter, der aus einem längsnahtgeschweißten, gewellten Metallrohr mit einer supraleitfähigen Schicht auf der Basis keramischer Werkstoffe besteht. Die Wandung des Supraleiters besteht aus einem metallischen Träger, an welchem eine die supraleitfähige Schicht tragende Metallfolie mittels eines Haftvermittlers angebracht ist.

Aus der eingangs erwähnten EP 0 830 694 B1 ist ein supraleitfähiges Wechselstromkabel mit einem Hinleiter und einem konzentrisch zu demselben angeordneten Rückleiter bekannt. Beide Leiter sind als Leiteranordnungen aus mehreren Leiterlagen aufgebaut. Zur Herstellung des Hinleiters werden supraleitfähige Einzelleiter unter vorgegebenen Winkeln in mehreren Lagen um einen zylindrischen Träger herumgewickelt. Auf den fertigen Hinleiter wird ein Dielektrikum mit ausreichender radialer Bemessung aufgebracht, um welches herum der Rückleiter durch Aufwickeln mehrerer Lagen von supraleitfähigen Einzelleitern angeordnet wird. Die Herstellung dieses bekannten Kabels ist aufwendig. Es hat mit entsprechendem Materialeinsatz relativ große radiale Abmessungen, die auch einen entsprechend groß bemessenen Kryostat erfordern, in dem das Kabel zum Betrieb als supraleitfähiges Kabel angeordnet wird und durch welchen das Kühlmittel hindurchgeleitet wird.

Der Erfindung liegt die Aufgabe zugrunde, das eingangs geschilderte Kabel so weiterzubilden, daß es bei vereinfachtem Aufbau einfacher herzustellen ist.

Diese Aufgabe wird entsprechend den kennzeichnenden Merkmalen des Patentanspruchs 1 gelöst.

Bei diesem Kabel besteht der als supraleitfähiger Hinleiter anzusehende zentrale Leiter aus einem einlagigen Rohr, das längseinlaufend aus einem das supraleitfähige Material tragenden Band geformt ist. Das Rohr ist aus sich heraus so stabil, daß kein gesonderter Träger für den zentralen Leiter benötigt wird. Dieser besteht selbst nur aus einer, durch die Dicke des Bandes bestimmten Lage, so daß seine radialen Abmessungen klein gehalten werden können. Das wirkt sich vorteilhaft auf die radialen Abmessungen des Dielektrikums aus, die insgesamt gegenüber bekannten Kabeln verkleinert werden können. Das den Leiter umgebende Band aus halbleitendem Material stabilisiert den Leiter und vermeidet dielektrische Probleme, die durch die am Schlitz des Leiters vorhandenen Kanten entstehen könnten. Einschließlich Rückleiter ergibt sich insgesamt ein kompaktes supraleitfähiges Kabel mit relativ geringen radialen Abmessungen und entsprechend vermindertem Materialaufwand. Die Abmessungen des das Kabel aufnehmenden Kryostats können mit Vorteil ebenfalls kleiner als üblich gehalten werden.

Der Rückleiter kann mit Vorteil ebenfalls aus einem längseinlaufenden, supraleitfähiges Material tragenden Band zu einem einlagigen Rohr geformt werden. Wenn derselbe durch Verschweißen des in Längsrichtung verlaufenden Schlitzes als geschlossenes Rohr ausgeführt wird, ergibt sich als weiterer Vorteil eine wirksame Trennung des Dielektrikums vom außerhalb des Rückleiters im Kryostat bewegten Kühlmittel. Der Druck eines im Dielektrikum vorhandenen Imprägniermittels kann dadurch - unabhängig vom Druck des Kühlmittels - auf einfache Weise konstant gehalten werden, so daß auch die dielektrischen Eigenschaften des Dielektrikums konstant bleiben.

Als supraleitfähiges Material für das Band, aus dem der zentrale Leiter und gegebenenfalls auch der Rückleiter geformt werden, wird vorzugsweise ReBCO eingesetzt. Mit besonderem Vorteil wird als eines dieser supraleitfähigen Materialien YBCO verwendet.

Ausführungsbeispiele des Erfindungsgegenstandes sind in den Zeichnungen dargestellt.

Es zeigen:
Fig. 1 ein Querschnittsbild eines supraleitfähigen Kabels nach der Erfindung.
Fig. 2 schematisch eine Anordnung zur Herstellung eines Leiters des Kabels nach Fig. 1.
Fig. 3 einen Schnitt durch Fig. 2 längs der Linie 111 - 111 in vergrößerter Darstellung.
Fig. 4 eine gegenüber den Fig. 2 und 3 abgewandelte Ausführungsform des Leiters.

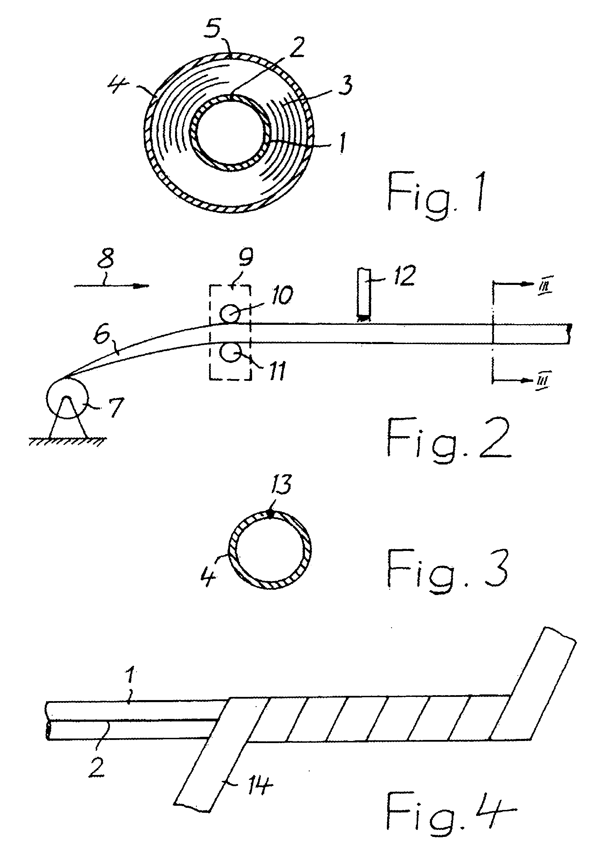

Das in Fig. 1 im Schnitt dargestellte supraleitfähige Kabel hat einen als einlagiges Rohr ausgeführten zentralen Leiter (Hinleiter) 1. Der Leiter 1 ist aus einem längseinlaufenden Band vorgegebener Breite, das supraleitfähiges Material trägt, zu einem Rohr mit in Längsrichtung verlaufendem Schlitz 2 geformt, an dem die beiden Kanten des Bandes aneinander liegen. Als supraleitfähiges Material sind vorzugsweise ReBCO und mit besonderem Vorteil YBCO eingesetzt. Zu seiner Stabilisierung ist der Leiter 1 von einem aus Fig. 4 ersichtlichen Band 14 aus halbleitendem Material umgeben, das in mindestens einer Lage um den Leiter 1 herumgewickelt wird. Das Band 14 ist in Fig. 1 der Übersichtlichkeit halber nicht mit eingezeichnet.

Über dem Leiter 1 bzw. über dem um denselben herumgewickelten Band 14 ist ein an sich bekanntes Dielektrikum 3 angeordnet, das von einem supraleitfähigen Rückleiter 4 umgeben ist. Der Rückleiter 4 kann an sich beliebig ausgeführt sein. Er ist mit Vorteil aber ebenfalls als einlagiges Rohr ausgeführt, das supraleitfähiges Material trägt und längseinlaufend zu einem Rohr geformt ist, an dessen in Längsrichtung verlaufendem Schlitz 5 die beiden Kanten des Bandes aneinander liegen. Für den Rückleiter 4 werden mit Vorteil die gleichen supraleitfähigen Materialien wie für den Leiter 1 eingesetzt. Der Schlitz 5 des Rückleiters 4 kann mit Vorteil durch Schweißen verschlossen werden, so daß sich ein geschlossenes Rohr ergibt. Ein solches Rohr wird gemäß Fig. 2 beispielsweise wie folgt hergestellt:
Ein supraleitfähiges Material tragendes Band 6 vorgegebener Breite wird von einer Spule 7 abgezogen und in Richtung des Pfeiles 8 durch eine Formungseinrichtung 9 geführt, die durch zwei Rollen 10 und 11 schematisch angedeutet ist. In der Formungseinrichtung wird ein Rohr mit einem in Längsrichtung verlaufenden Schlitz geformt, an dem die beiden Kanten des Bandes 6 aneinander liegen. In einer in Abzugsrichtung folgenden Schweißeinheit 12 wird der Schlitz verschlossen. Es liegt dann als Rückleiter 4 ein in Fig. 3 dargestelltes Rohr vor, das durch eine Schweißnaht 13 verschlossen ist.

In dem Dielektrikum 3 kann in üblicher Technik ein unter Druck stehendes Imprägniermittel vorhanden sein. Dazu kann ebenfalls in üblicher Technik bei entsprechendem Aufbau des Rückleiters 4 das durch den umgebenden Kryostat unter Druck geleitete Kühlmittel verwendet werden. Ein Druckabfall des Kühlmittels bzw. Imprägniermittels kann die dielektrischen Eigenschaften des Dielektrikums 3 so verschlechtern, daß es zu einem dasselbe zerstörenden Durchschlag zwischen Leiter 1 und Rückleiter 4 kommt. Wenn bei dem supraleitfähigen Kabel nach Fig. 1 der Rückleiter 4 in der geschilderten Weise als geschlossenes Rohr ausgeführt wird, ist das Dielektrikum 3 nach außen abgeschlossen. Es kann dann ein vom äußeren Kühlmittel unabhängiges, unter konstantem Druck stehendes Imprägniermittel verwendet werden, wodurch die dielektrischen Eigenschaften des Dielektrikums konstant bleiben.

## Patentansprüche

1. Supraleitfähiges Kabel, das einen zentralen supraleitfähigen elektrischen Leiter (1), einen denselben umgebendes Dielektrikum (3) und einen über demselben angeordneten supraleitfähigen Rückleiter (4) aufweist, **dadurch gekennzeichnet,**
- **daß** der zentrale Leiter (1) in an sich bekannter Weise aus einem supraleitfähiges Material tragenden Band (6) längseinlaufend zu einem Rohr mit einem in axialer Richtung verlaufenden Schlitz (2) geformt ist, an dem die beiden Kanten des Bandes (6) aneinander liegen, und
- **daß** um den zentralen Leiter (1) ein Band (14) aus halbleitendem Material in mindestens einer Lage herumgewickelt ist.

2. Kabel nach Anspruch 1, **dadurch gekennzeichnet, daß** auch der Rückleiter (4) aus einem supraleitfähiges Material tragenden Band längseinlaufend zu einem Rohr mit einem in axialer Richtung verlaufenden Schlitz (5) geformt ist, an dem die beiden Kanten des Bandes aneinander liegen.

3. Kabel nach Anspruch 2, **dadurch gekennzeichnet, daß** der Schlitz (5) des Rückleiters (4) durch Schweißen verschlossen ist.

4. Kabel nach einem der Ansprüche 1 bis 3, **dadurch gekennzeichnet, daß** als supraleitfähiges Material ReBCO eingesetzt ist.

5. Kabel nach Anspruch 4, **dadurch gekennzeichnet, daß** als supraleitfähiges Material YBCO eingesetzt ist.

## Claims

1. A superconductive cable, which has a central superconductive electrical conductor(1), a dielectric (3) which surrounds the same and a superconductive return conductor (4) which is arranged above the same, **characterized in**
- **that** the central conductor (1) is formed from a ribbon (6), which carries a superconductive material, longitudinally into a tube having a slot (2) which runs in the axial direction and at which the two edges of the ribbon (6) abut to each other, and
- **that** at least one layer of a ribbon (14) of semiconductive material is wound around the central conductor (1).

2. Cable according to claim 1, **characterized in that** the return conductor (4) is also formed from a ribbon which carries superconductive material longitudinally into a tub e having a slot (5) which runs in the axial direction, and at which the two edgesofthe ribbon abut to each other.

3. Cable according to claim 2, **characterized in that** the slot (5) in the return conductor (4) is closed by welding.

4. Cable according to one of the claims 1 to 3, **characterized in that** Re BC O is used as the superconductive material.

5. Cable according to claim 4, **characterized in that** YBCO is used as the superconductive material.

## Revendications

1. Câble supraconducteur qui présente un conducteur central (1) électriquement supraconducteur entouré par un diélectrique (3) et un conducteur de retour (4) supraconducteur disposé au-dessus de celui-ci, **caractérisé en ce**
- **que** le conducteur central (1) est formé de manière intrinsèquement connue d'un ruban (6) portant un matériau supraconducteur et qui s'étend en longueur pour former un tube doté d'une fente (2) qui s'étend dans la direction axiale et sur laquelle les deux bords du ruban (6) sont adjacents et
- **qu'**un ruban (14) en matériau semi-conducteur est enroulé en au moins une couche autour du conducteur central (1).

2. Câble selon la revendication 1, **caractérisé en ce que** le conducteur de retour (4) est également formé d'un ruban portant un matériau supraconducteur et qui s'étend en longueur pour former un tube doté d'une fente (5) qui s'étend dans la direction axiale et sur laquelle les deux bords du ruban sont adjacents.

3. Câble selon la revendication 2, **caractérisé en ce que** la fente (5) du conducteur de retour (4) est fermée par soudage.

4. Câble selon l'une des revendications 1 à 3, **caractérisé en ce qu'**on utilise comme matériau supraconducteur du ReBCO.

5. Câble selon la revendication 4, **caractérisé en ce qu'**on utilise comme matériau supraconducteur du YBCO.
